# EUROPEAN PATENT SPECIFICATION

(11) **EP 1 931 050 B1**
(45) Date of publication and mention of the grant of the patent: **24.06.2015**
(21) Application number: 07122206.1
(22) Date of filing: 04.12.2007
(51) Int. Cl.: H04B 1/08, B60R 11/02

(54) **In-vehicle electronic system and in-vehicle electronic apparatus**
Elektronisches System und elektronisches Gerät in Fahrzeugen
Système électronique embarqué et appareil électronique embarqué

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(43) Date of publication of application: 11.06.2008
(73) Proprietor: FUJITSU TEN LIMITED, Kobe-shi Hyogo 652-8510 (JP)
(72) Inventor: Ozaki, Yukisuke c/o FUJITSU TEN LIMITED, Hyogo 652-8510 (JP)
(74) Representative: Ward, James Norman

(56) References cited:
- WO-A1-95/19030
- US-A1- 2002 152 027
- US-B1- 6 701 161

## Description

This invention relates to an in-vehicle electronic apparatus in which a portable electronic apparatus is detachably provided.

As conventional navigation apparatuses, there are widely known small-sized portable navigation apparatuses with simplified structure and portability, also known as Personal Navigation Devices (hereinafter, referred to as PND); and in-vehicle navigation apparatuses accommodated and fixed in a recess portion (DIN opening) formed in a dashboard of a vehicle. The in-vehicle navigation apparatuses are capable of guiding with high accuracy by use of the information supplied from vehicles such as vehicle speed, and some of the in-vehicle navigation apparatuses are equipped with audio devices.

In recent years, there have been proposed an audio navigation system with both portability of the PND type navigation apparatus and high-accuracy guide function of the in-vehicle navigation apparatus. This audio navigation system is provided with an audio portion and a navigation portion, and the main body thereof is accommodated and fixed in the DIN opening of the vehicle. However, the navigation portion is removable from the audio portion. The removed navigation portion is configured such that the power supply is equipped therein and the navigation is enabled with the navigation portion removed.

Accordingly, in the audio navigation system equipped with the detachable navigation portion, how to improve the user friendliness remains to be solved.

Japanese Patent Application Publication No. 2003-35554 is an invention relating to the portable type navigation apparatus that can be detached from a vehicle. There are provided an in-vehicle unit mounted in a vehicle and storing and retaining map information, and a portable unit detachably mounted in the in-vehicle unit and acquiring a portion of the map information from the in-vehicle unit at every given timing. It is disclosed that when the portable unit is detached from the in-vehicle unit, the acquired map information is displayed on the portable unit.

However, in a system in which the navigation apparatus is detachable from the audio apparatus, there is still room for improvement of user-friendliness.

WO 95/19030 discloses a personal onboard information system for a vehicle. The system comprises a PDA and a cradle mounted in a vehicle for detachably receiving the PDA.

US 2002/0152027 discloses a vehicle docking station for receiving a portable handheld computing device.

The present invention has been made in view of the above circumstances and provides an in-vehicle electronic system and an in-vehicle electronic apparatus, with which user-friendliness is improved in that the display can be changed according to user's feelings in a system where the portable electronic apparatus can be detached from the in-vehicle electronic apparatus.

According to an aspect of the present invention, there is provided an in-vehicle electronic system as defined in claim 1. Therefore, a user who uses the portable electronic apparatus is able to operate the portable electronic apparatus immediately after getting in a vehicle, whereby user-friendliness can be improved.

Exemplary embodiments of the present invention will be described in detail with reference to the following drawings, by way of example only, wherein:
FIG. 1 is a view showing a configuration of an audio navigation system;
FIG. 2A shows an exterior shape of the audio navigation system, and FIG. 2B is a view showing a navigation apparatus taken out of an audio apparatus;
FIG. 3 is a view showing the audio navigation system accommodated in a 2DIN opening of a vehicle;
FIG. 4 shows a configuration of a detecting circuit;
FIG. 5A is an example of displaying a navi screen on a display portion, and FIG. 5B is an example of displaying an audio screen on the display portion;
FIG. 6 is a flowchart showing a procedure of a controller of the audio apparatus when the navigation apparatus is attached to the audio apparatus;
FIG. 7 is a flowchart showing a procedure of a controller of the navigation apparatus when the navigation apparatus is detached from the audio apparatus; and
FIG. 8 is a flowchart showing a control procedure of the controller of the audio apparatus by means of a button operation of a screen button.

A description will now be given, with reference to the accompanying drawings, of exemplary embodiments of the present invention.

### (Embodiment)

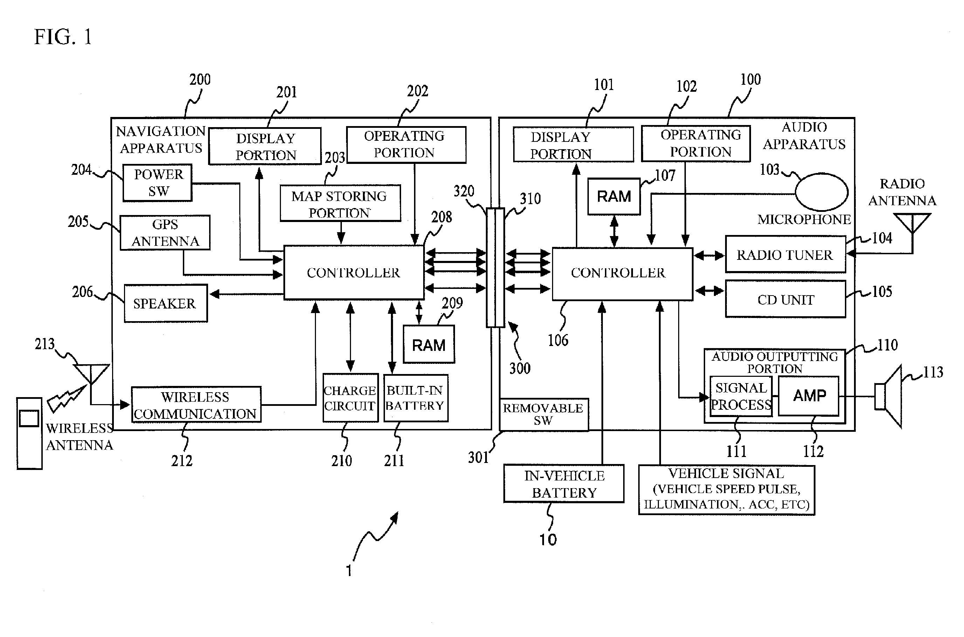

FIG. 1 is a view showing a configuration of an audio and navigation system 1.

The audio and navigation system 1 employed in the present exemplary embodiment includes: an audio apparatus 100 mounted in a vehicle; and a navigation apparatus 200 detachably provided in the audio apparatus 100. The navigation apparatus 200 is connectable to the audio apparatus 100 by a connector portion 300.

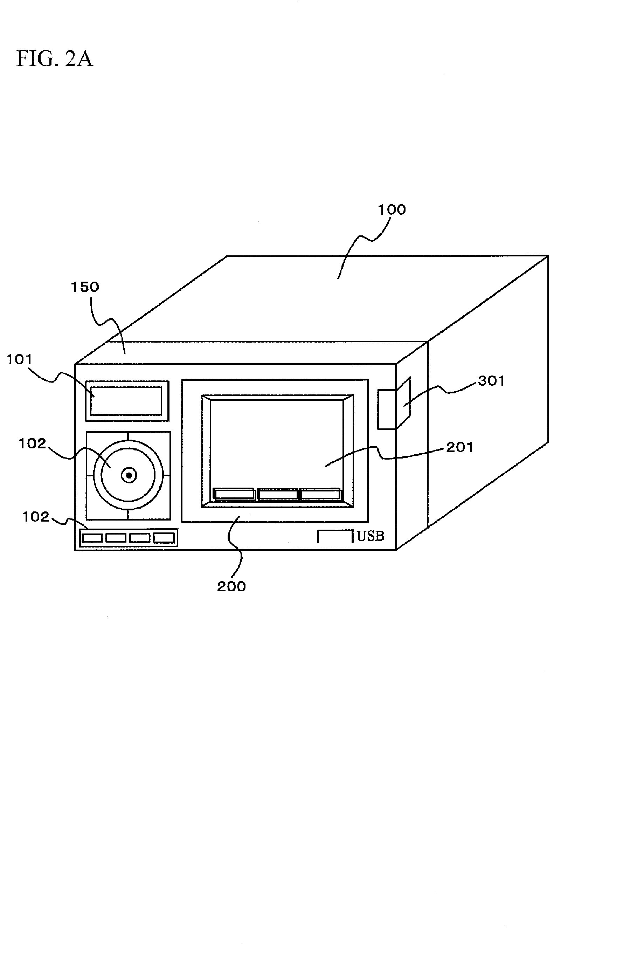

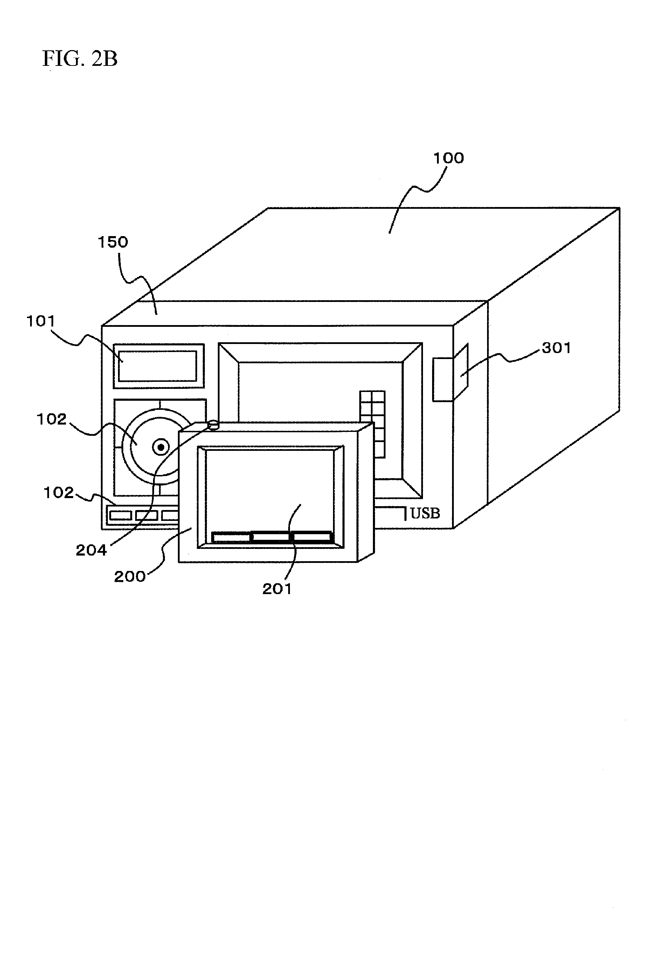

FIG. 2A shows an exterior shape of the audio and navigation system 1. The navigation apparatus 200 is fitted to a front face panel 150 of the audio apparatus 100. Also, the navigation apparatus 200 can be taken out of the audio apparatus 100 as shown in FIG. 2B and used alone as a single unit. The front face panel 150 of the audio apparatus 100 is provided with: in addition to the navigation apparatus 200; a display portion 101; an operating portion 102 operable the audio apparatus 100; and the like. The operating portion 102 is provided with, for example, an operation button, push button, cross key, enter key, TITL (eject button), and the like, and in addition, the operating portion 102 is also provided with a screen button 122 (this button will be described later) that can change the display of a display portion 201.

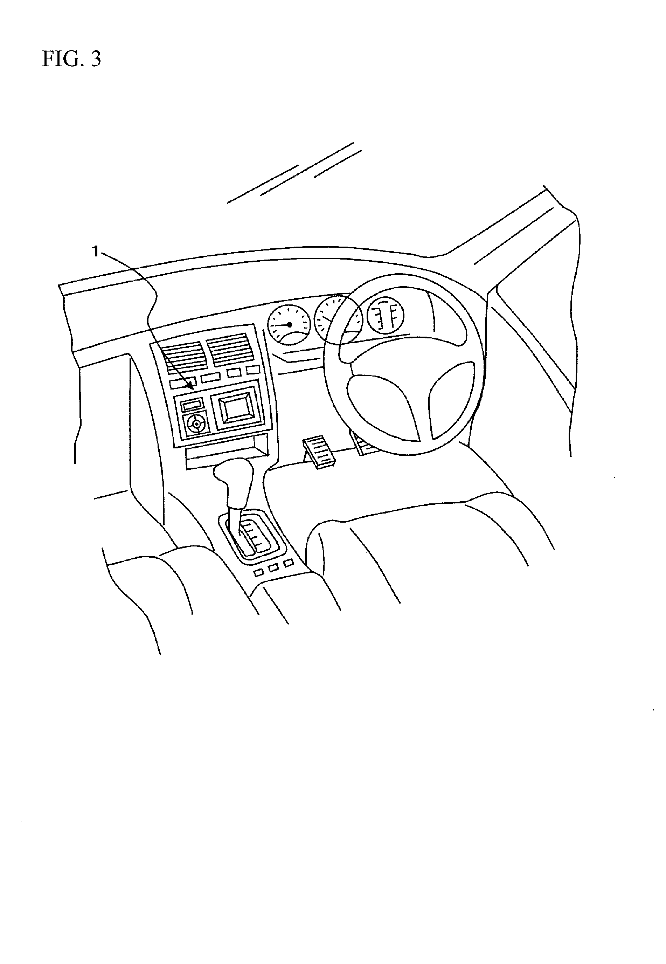

The audio and navigation system 1 shown in FIG. 2A is accommodated and fixed in a 2DIN opening of a vehicle, as shown in FIG. 3.

Referring back to FIG. 1, a description will be given of a configuration of each of the components. The audio apparatus 100 is provided with: the display portion 101; the operating portion 102; a microphone 103; a radio tuner 104; a CD (Compact Disk) unit 105; a controller 106; a RAM (Random Access Memory) 107; and an audio outputting portion 110.

The display portion 101 of the audio apparatus 100 is capable of displaying music information, play time, and the like. With the operating portion 102, it is possible to operate the CD unit 105 or the radio tuner 104 for selecting a song to be played by the audio apparatus 100, a broadcast program to be received, or the like.

The radio tuner 104 and the CD unit 105 are audio sources, and in addition, an MD (Mini Disk) unit or a cassette recorder may be provided. When any of the radio tuner 104 and the CD unit 105 is selected by the operating portion 102 as an operation target, the controller 106 outputs a signal fed by the selected audio source, to the audio outputting portion 110.

The audio outputting portion 110 is provided with: a signal processor 111 that processes a signal sent from the controller 106; and an amplifier 112 that amplifies a signal. The signal amplified by the amplifier 112 is output from a speaker 113 connected thereto.

The controller 106 reads a program or the like stored in the RAM 107, and controls each part of the audio apparatus 100.

The microphone 103 is a hands-free type, and is provided in the audio apparatus 100. The controller 106 outputs the audio input from the microphone through a connector 310 to a wireless communication sender/receiver 212 of the navigation apparatus 200 to send to communications equipment of an apparatus to be communicated with.

In addition, the controller 106 controls the supply of the power supplied from an in-vehicle battery 10 mounted in a vehicle, to the navigation apparatus 200.

Further, the controller 106 is fed with a vehicle speed pulse, an illumination power signal, ACC (accessory power) signal, or the like, and performs processing according to the signal. The vehicle speed pulse is output to a controller 208 of the navigation apparatus 200 from the controller 106.

The navigation apparatus 200 includes: the display portion 201; an operating portion 202; a map storage portion 203; a power switch 204; a GPS (Global Positioning System) antenna 205; a speaker 206; the controller 208; a RAM 209; a charge circuit 210; a built-in battery 211; the wireless communication sender/receiver 212; and a wireless antenna 213.

The GPS antenna 205 receives a GPS signal from a satellite, and the GPS signal received by the GPS antenna 205 is output to the controller 208. The controller 208 determines the position of the vehicle based on the GPS signal fed by the satellite (GPS navigation).

The map storage portion 203 stores map data, and the map data read from the map storage portion 203 is decoded by a decoder (not shown). The decoder is connected to the controller 208, and the controller 208 performs a so-called map matching process that matches the vehicle position determined with the map data. By the map matching process, map image data is to be created such that the vehicle position is indicated with accuracy. Such created map image data is displayed on the display portion (main display) 201 by the control of the controller 208.

Also, an operation signal applied from the operating portion 202 is input into the controller 208, and then the processing is performed by the controller 208 in accordance with the operation signal. For example, a destination is set according to the instruction by operating the operating portion 202, the controller 208 searches for a most appropriate route from the vehicle position to the destination and displays the route with the map on the display portion 201 as a guiding route. Also, the audio guidance of the navigation is output from the speaker 206 by the control of the controller 208.

Here, when the navigation apparatus 200 is attached to the audio apparatus 100, the audio guidance of the navigation apparatus 200 is output from the speaker 113 connected to the audio apparatus 100.

In addition thereto, the controller 208 is capable of displaying the music information of the audio apparatus 100 on the display portion (main display) 201, by operating the operating portion 202 or 102.

The navigation apparatus 200 further includes: the charge circuit 210 that charges up the built-in battery 211, the power supplied by the control of the controller 106 of the audio apparatus 100; and the built-in battery 211 that supplies the power to the navigation apparatus 200, when the navigation apparatus 200 is removed from the audio apparatus 100 or when there is no power supplied from the in-vehicle battery 10.

The navigation apparatus 200 is also provided with: the wireless antenna 213; and the wireless communication sender/receiver 212, and is configured to acquire traffic information such as traffic congestion prediction or the like, from a center, not shown. The traffic information is used for selecting a route at the time of navigation.

It is also possible to utilize as a hands-free function, by receiving the sound on communication from a telephone to be communicated with and outputting the sound on communication from the microphone 103 in connection with the audio apparatus 100.

The audio apparatus 100 and the navigation apparatus 200 are connected by multiple signal lines such as a control line, a power line, and the like. The connector portion 300 has the connector 310 of the audio apparatus side and a connector 320 of the navigation apparatus side. When the connectors are in connection, the aforementioned multiple signal lines are connected.

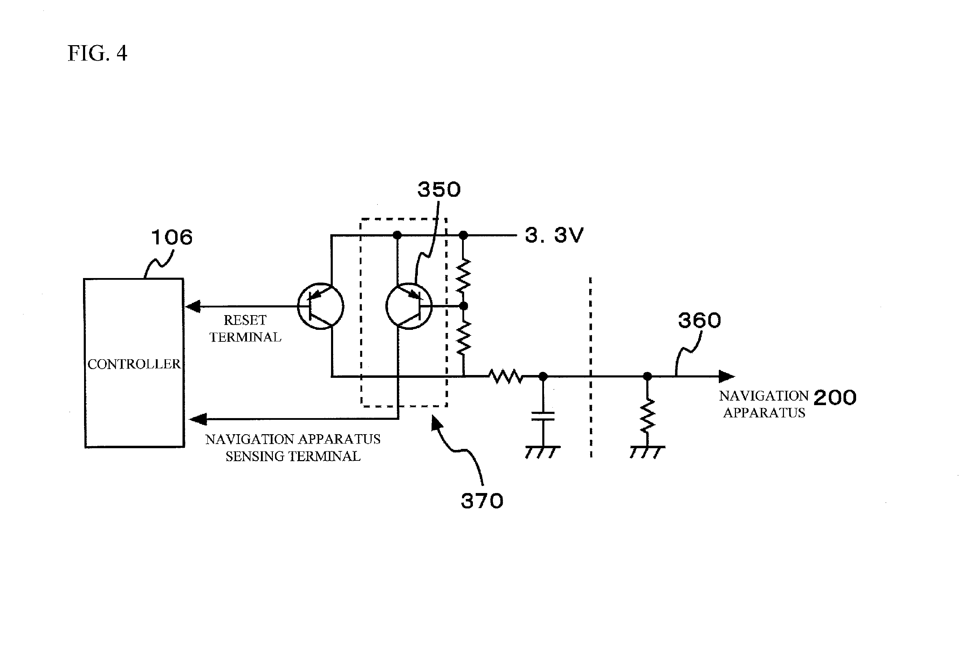

Also, the connector portion 300 is provided with a detecting circuit 370 that detects whether or not the navigation apparatus 200 is connected to the connector portion 300. The configuration of the detecting circuit 370 is shown in FIG. 4.

A transistor 350 shown in FIG. 4 is off, while the navigation apparatus 200 is not in connection with a power line 360 supplying power to the navigation apparatus 200. For this reason, the voltage supplied to the controller 106 of the audio apparatus 100 is 0 V. When the navigation apparatus 200 is connected to the power line 360, the transistor 350 turns on and a voltage of 3.3 V is supplied to the controller 106 of the audio apparatus 100 from the power supply.

When an output voltage of a navigation apparatus sensing terminal connecting the transistor 350 and the controller 106 is 3.3 V, the controller 106 senses a connected state. When the output voltage is 0 V, the controller 106 senses an unconnected state.

As shown in FIG. 2A and FIG. 2B, the audio apparatus 100 further includes a remove switch (SW) 301. By pushing the remove switch 301, the navigation apparatus 200 is taken out of the front face panel 150 of the audio apparatus 100.

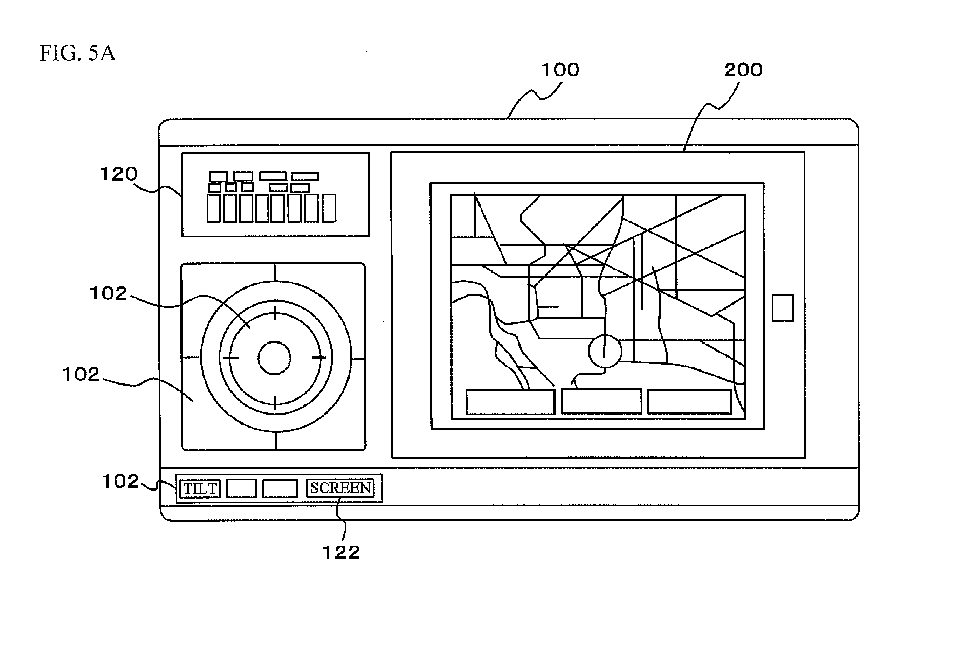

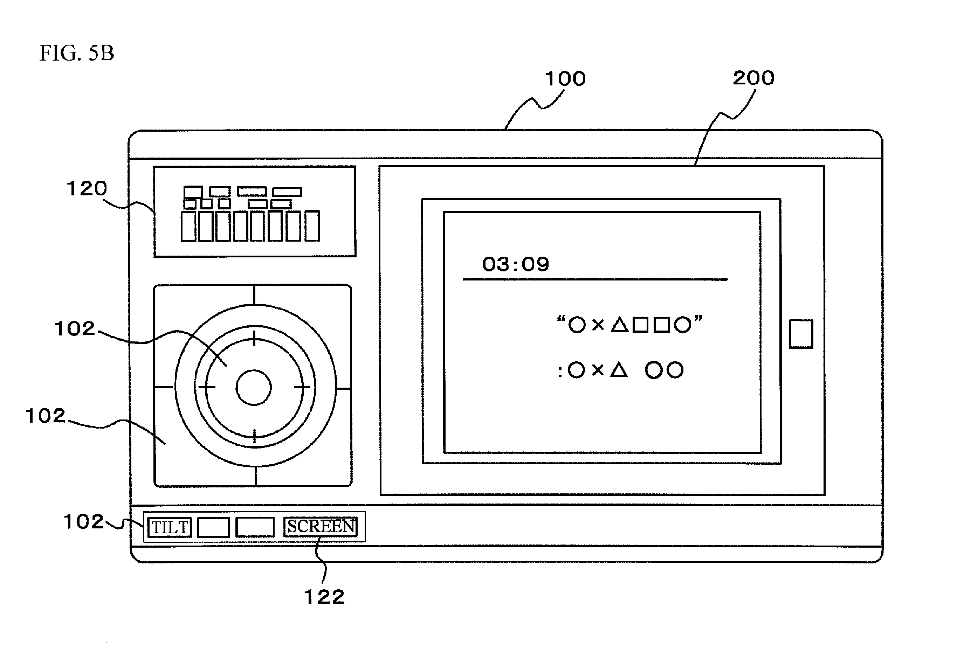

The front face panel 150 to be an operating face of the audio apparatus 100 is provided with the screen button 122 for switching between display information on the navigation apparatus 200 and the display information of the audio apparatus 100, to be displayed on the display screen of the navigation apparatus 200 (see FIG. 5A and FIG. 5B). The display information of the navigation apparatus 200 includes not only the map information or guiding path (route) information for navigation but also information for operating the navigation apparatus 200 or the information received by the wireless communication sender/receiver 212. Hereinafter, the screen displaying the above-described information is referred to as Navi Screen.

The display information of the audio apparatus 100 includes the information on music data to be reproduced by the audio apparatus, the operation screen of the radio, the screen for volume operation, sound quality operation screen, and the like. Hereinafter, the screen displaying the above-described information is referred to as audio screen. FIG. 5A is an example of displaying Navi Screen on the display portion 201 of the navigation apparatus 200, and FIG. 5B is an example of displaying an audio screen on the display portion 201 of the navigation apparatus 200.

When the navigation apparatus 200 is attached to the audio apparatus 100, the audio screen and Navi Screen can be changed by pushing the screen button 122 for a short period of time. The display on the display portion 201 can be turned off by pushing for more than a given period of time, and can be turned on by pushing the screen button 122 again.

At this time, the controller 106 of the audio apparatus 100 sends an instruction to the navigation apparatus 200 according to the operation of the screen button 122. The navigation apparatus 200 changes the display of the display portion 201 according to the control of the controller 106 of the audio apparatus 100.

Also, even when the display of the display portion 201 is off, it is possible to output the audio guidance of the navigation apparatus 200 or play by the audio apparatus 100 continuously.

The controller 106 of the audio apparatus 100 turns off the display of the display portion 201 that has been off, when the screen button 122 is pushed, when it is detected that the navigation apparatus 200 is removed from the audio apparatus 100, or when a hands-free telephone call is received via the wireless communication sender/receiver 212.

In addition, when the display of the display portion 201 is turned on, Navi Screen may be displayed on the display portion 201 at first. Specifically, Navi Screen is to be displayed in the beginning, when the audio apparatus 100 is powered on, or when there is an operation on the screen button 122. A user is able to recognize the vehicle location on a map, just after getting in the vehicle. Furthermore, as soon as the audio and navigation system is powered on, the map or the vehicle location can be checked.

In the present exemplary embodiment, in a system in which the navigation apparatus is detachable from the audio apparatus, it is desirable to improve user-friendliness. For this reason, when the controller 106 of the audio apparatus 100 detects the connection of the navigation apparatus 200 with the detecting circuit 370, the controller 106 causes the controller 208 of the navigation apparatus 200 to display the display information of navigation.

Also, when a destination is set in the navigation apparatus 200 and the map information or the guiding path (route) to the destination is displayed, the navigation apparatus 200 causes the map information or the guiding path (route) information to be displayed continuously after the audio apparatus 100 is attached.

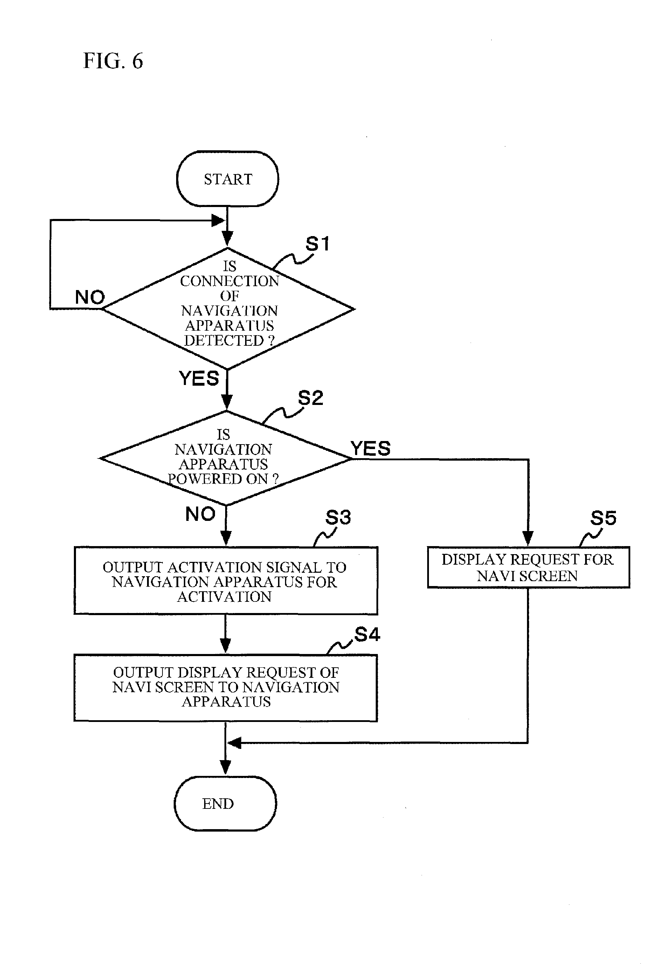

Referring to the flowchart shown in FIG. 6, a description will be given of a procedure of the controller 106 of the audio apparatus 100 when the connection of the navigation apparatus 200 is detected.

When the controller 106 of the audio apparatus 100 detects the connection of the navigation apparatus 200 (step S1), the controller 106 determines whether or not the navigation apparatus 200 is powered on (step S2). The controller 106 of the audio apparatus 100 determines whether or not the communication with the controller 208 of the navigation apparatus 200 is enabled so as to determine whether or not the navigation apparatus 200 is powered on.

If the navigation apparatus 200 is powered on (step S2/YES), the controller 106 outputs a display request of Navi Screen to the controller 208 of the navigation apparatus 200 (step S5).

If the navigation apparatus 200 is not powered on (step S2/NO), the controller 106 outputs an activation signal to the navigation apparatus 200 to activate the navigation apparatus 200 (step S3), and outputs the display request of Navi Screen (step S4).

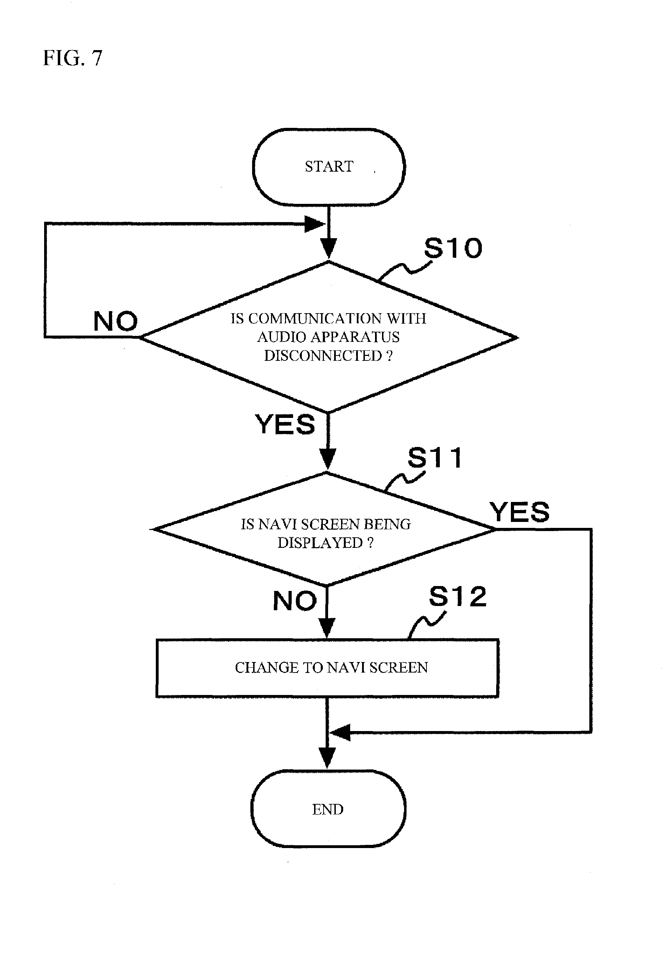

Next, a description will be given of a procedure of the controller 208 of the navigation apparatus 200 when the navigation apparatus 200 is detached from the audio apparatus 100, with reference to the flowchart shown in FIG. 7.

If the communication with the audio apparatus 100 is disconnected, the controller 208 of the navigation apparatus 200 detects that the navigation apparatus 200 is detached from the audio apparatus 100 (step S10). If the detachment from the audio apparatus 100 is detected (step S10/YES), the controller 208 of the navigation apparatus 200 determines whether or not Navi Screen is being displayed on the display portion 201 (step S11). If Navi Screen is not being displayed

(step S11/NO), the display is changed to Navi Screen (step S12).

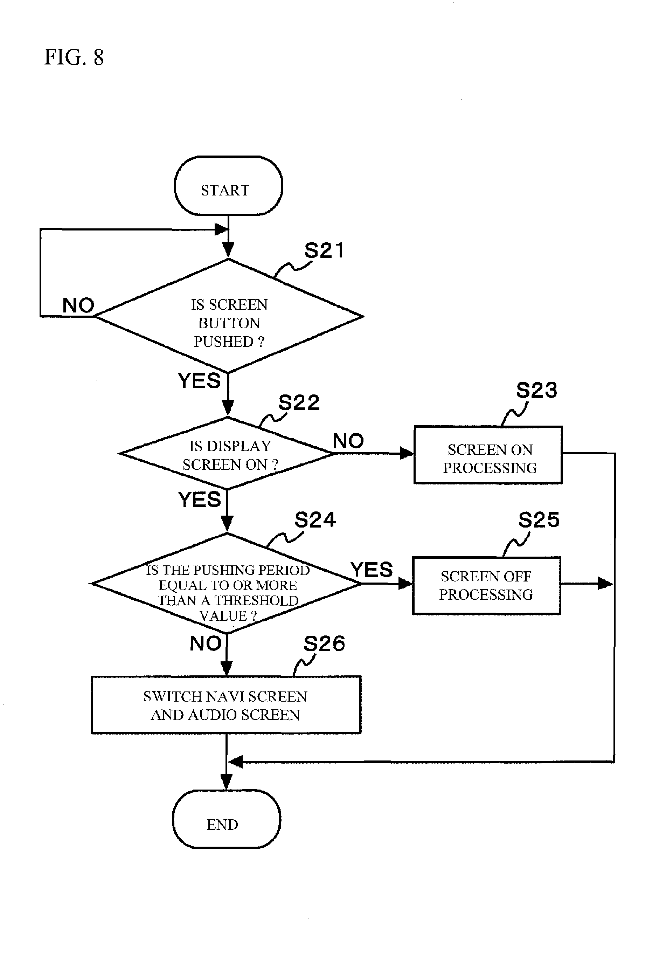

Next, a description will be given of a control procedure for changing the display screen by means of the operation of the screen button 122, with reference to the flowchart shown in FIG. 8.

When the screen button 122 is pushed (step S21), the controller 106 of the audio apparatus inquires of the controller 208 of the navigation apparatus 200 whether or not an image is being displayed on a display portion 201 (step S22). If the image is not displayed on the display portion 201 (step S22/NO), a request for turning on the display on the display portion 201 is output to the controller 208 of the navigation apparatus 200. If the image is being displayed on the display portion 201 (step S22/YES), it is determined whether or not the period of time while the screen button 122 is being pushed exceeds a threshold value (step S24). If the period of time while the screen button 122 is being pushed exceeds the threshold value (step S24/NO), a request for turning off the screen display is output to the controller 208 of the navigation apparatus 200 (step S25). Also, if the period of time while the screen button 122 is being pushed does not exceed the threshold value (step S24/YES), a request for switching between Navi Screen and the audio screen is output to the controller 208 of the navigation apparatus 200 (step S26).

In the present exemplary embodiment, when the navigation apparatus 200 is attached to the audio apparatus 100, the display information of the navigation apparatus is displayed on the display portion 201 of the navigation apparatus 200. Accordingly, a user who uses the navigation apparatus is able to start the operation of the navigation apparatus, as soon as the user gets in a vehicle, whereby the user friendliness can be improved.

The controller 208 of the navigation apparatus 200 causes the display portion 201 to continuously display the information on the guiding path (route) that has been displayed on the display portion 201 before the attachment to the audio apparatus 100, after the navigation apparatus 200 is attached to the audio apparatus 100. Therefore, it is possible to display the information on the guiding path after the navigation apparatus 200 is attached to the audio apparatus 100, thereby eliminating the necessity of setting the destination again.

Also, the controller 208 of the navigation apparatus 200 displays Navi Screen of the navigation apparatus 200 on the display portion 201, when detecting that the navigation apparatus 200 is detached from the audio apparatus 100. Accordingly, as soon as the navigation apparatus is removed from the audio apparatus, it is possible to start the operation of navigation.

In addition, in the above-described audio and navigation system 1, the controller 106 of the audio apparatus 100 functions as a main control apparatus; however, the controller 208 of the navigation apparatus 200 may function as the main control apparatus. The term GPS as used in this application refers to any suitable satellite navigation system.

Although a few specific exemplary embodiments employed in the present invention have been shown and described, it would be appreciated by those skilled in the art that changes may be made in these exemplary embodiments without departing from the invention, the scope of which is defined in the claims.

## Claims

1. An in-vehicle electronic audio and navigation system comprising:
an in-vehicle electronic audio apparatus (100) mounted in a vehicle; and
a portable electronic navigation apparatus (200) detachably provided to the in-vehicle electronic audio apparatus (100),
wherein:
the in-vehicle electronic audio apparatus (100) comprises:
a detecting portion (370) configured to detect connection of the portable electronic navigation apparatus (200); and
a first controller (106) configured to determine whether or not the portable electronic navigation apparatus (200) is powered on, when the connection of the portable electronic navigation apparatus (200) to the in-vehicle audio apparatus (100) is detected by the detecting portion (370), and configured to activate the portable electronic navigation apparatus (200) and to request the portable electronic navigation apparatus (200) to display a navigation screen of the portable electronic navigation apparatus (200) on a display portion (201) of the portable electronic navigation apparatus (200), when the first controller (106) determines that the portable electronic navigation apparatus is not powered on.

2. The in-vehicle electronic system as claimed in claim 1, wherein the second controller (208) configured to control the portable electronic navigation apparatus (200) is operable to continuously display guide information of a route that has been displayed on the display portion (201) before the portable electronic navigation apparatus (200) is attached to the in-vehicle electronic audio apparatus (100), after the portable electronic navigation apparatus (200) is attached to the in-vehicle electronic audio apparatus (100).

3. The in-vehicle electronic system as claimed in claim 2, wherein the second controller (208) is further operable to cause the display portion (201) to display the guide information, when detecting that the portable electronic navigation apparatus (200) is removed from the in-vehicle electronic apparatus (100).

4. The in-vehicle electronic system as claimed in claim 1, 2 or 3, wherein the in-vehicle electronic audio apparatus (100) includes a switch (122) for switching between a first display displaying display information of the portable electronic navigation apparatus (200) and a second display displaying the display information of the in-vehicle electronic audio apparatus (100), on the display portion (201), in a state where the portable electronic navigation apparatus (200) is attached.

5. The in-vehicle electronic system as claimed in claim 4, wherein the first controller (106) is operable to turn off display of the display portion (201), when the switch (122) is pushed continuously for more than a given period of time.

6. The in-vehicle electronic system as claimed in any preceding claim, wherein the first controller (106) is further operable to display display information of the portable electronic navigation apparatus (200) on the display portion (201), when the in-vehicle electronic audio apparatus (100) is powered on.

## Patentansprüche

1. Elektronisches Audio- und Navigationssystem in einem Fahrzeug, umfassend
eine elektronische Audiovorrichtung (100) in einem Fahrzeug, angebracht in einem Fahrzeug; und
eine tragbare elektronische Navigationsvorrichtung (200), die lösbar an der elektronischen Audiovorrichtung (100) in einem Fahrzeug bereitgestellt ist,
worin
die elektronische Audiovorrichtung (100) in einem Fahrzeug umfasst
einen Erfassungsabschnitt (370), ausgelegt zum Erfassen von Befestigung der tragbaren elektronischen Navigationsvorrichtung (200); und
eine erste Steuerung (106), ausgelegt zum Bestimmen, ob die tragbare elektronische Navigationsvorrichtung (200) eingeschaltet ist oder nicht, wird die Befestigung der tragbaren elektronischen Navigationsvorrichtung (200) an der elektronischen Audiovorrichtung (100) in einem Fahrzeug vom Erfassungsabschnitt (370) erfasst, und ausgelegt zum Aktivieren der tragbaren elektronischen Navigationsvorrichtung (200) und zum Anfragen, dass die tragbare elektronische Navigationsvorrichtung (200) einen Navigationsschirm der tragbaren elektronischen Navigationsvorrichtung (200) auf einem Anzeigeabschnitt (201) der tragbaren elektronischen Navigationsvorrichtung (200) anzeigt, bestimmt die erste Steuerung (106), dass die tragbare elektronische Navigationsvorrichtung nicht eingeschaltet ist.

2. Elektronisches System in einem Fahrzeug gemäß Anspruch 1, wobei die zweite Steuerung (208), ausgelegt zum Steuern der tragbaren elektronischen Navigationsvorrichtung (200), ausführbar ist zum kontinuierlichen Anzeigen von Führungsinformation einer Route, die auf dem Anzeigeabschnitt (201) angezeigt worden ist, bevor die tragbare elektronische Navigationsvorrichtung (200) an der elektronischen Audiovorrichtung (100) in einem Fahrzeug befestigt worden ist, nachdem die tragbare elektronische Navigationsvorrichtung (200) an der elektronischen Audiovorrichtung (100) in einem Fahrzeug befestigt worden ist.

3. Elektronisches System in einem Fahrzeug gemäß Anspruch 2, wobei die zweite Steuerung (208) zudem ausführbar ist zum Auslösen, dass der Anzeigeabschnitt (201) die Führungsinformation anzeigt, wird erfasst, dass die tragbare elektronische Navigationsvorrichtung (200) von der elektronischen Audiovorrichtung (100) in einem Fahrzeug entfernt ist.

4. Elektronisches System in einem Fahrzeug gemäß Anspruch 1, 2 oder 3, wobei die elektronische Audiovorrichtung (100) in einem Fahrzeug einen Schalter (122) aufweist zum Schalten zwischen einer ersten Anzeige, die Anzeigeninformation der tragbaren elektronischen Navigationsvorrichtung (200) anzeigt, und einer zweiten Anzeige, die Anzeigeninformation der elektronischen Audiovorrichtung (100) in einem Fahrzeug anzeigt, auf der Anzeigevorrichtung (201), in einem Zustand, in dem die tragbare elektronische Navigationsvorrichtung (200) befestigt ist.

5. Elektronisches System in einem Fahrzeug gemäß Anspruch 4, wobei die erste Steuerung (106) ausführbar ist zum Abschalten der Anzeige auf dem Anzeigeabschnitt (201), ist der Schalter (122) während mehr als einer bestimmten Zeitspanne kontinuierlich gedrückt.

6. Elektronisches System in einem Fahrzeug gemäß irgendeinem vorhergehenden Anspruch, wobei die erste Steuerung (106) zudem ausführbar ist zum Anzeigen von Anzeigeinformation der tragbaren elektronischen Navigationsvorrichtung (200) auf dem Anzeigeabschnitt (201), ist die elektronische Audiovorrichtung (100) in einem Fahrzeug eingeschaltet.

## Revendications

1. Un système de navigation et audio électronique embarqué dans un véhicule comprenant :
un appareil audio électronique embarqué dans un véhicule (100) monté dans un véhicule, et
un appareil de navigation électronique portatif (200) fixé de manière amovible à l'appareil audio électronique embarqué dans un véhicule (100),
où :
l'appareil audio électronique embarqué dans un véhicule (100) comprend :
une partie de détection (370) configurée de façon à détecter un raccordement de l'appareil de navigation électronique portatif (200), et
un premier dispositif de commande (106) configuré de façon à déterminer si ou non l'appareil de navigation électronique portatif (200) est sous tension lorsque le raccordement de l'appareil de navigation électronique portatif (200) à l'appareil audio embarqué dans un véhicule (100) est détecté par la partie de détection (370), et configuré de façon à activer l'appareil de navigation électronique portatif (200) et à demander à l'appareil de navigation électronique portatif (200) d'afficher un écran de navigation de l'appareil de navigation électronique portatif (200) sur une partie d'affichage (201) de l'appareil de navigation électronique portatif (200) lorsque le premier dispositif de commande (106) détermine que l'appareil de navigation électronique portatif n'est pas sous tension.

2. Le système électronique embarqué dans un véhicule selon la revendication 1, où le deuxième dispositif de commande (208) configuré de façon à commander l'appareil de navigation électronique portatif (200) est conçu de façon à afficher en continu des informations de guidage d'un itinéraire qui a été affiché sur la partie d'affichage (201) avant que l'appareil de navigation électronique portatif (200) ne soit fixé à l'appareil audio électronique embarqué dans un véhicule (100), après que l'appareil de navigation électronique portatif (200) ait été fixé à l'appareil audio électronique embarqué dans un véhicule (100).

3. Le système électronique embarqué dans un véhicule selon la revendication 2, où le deuxième dispositif de commande (208) est conçu en outre de façon à amener la partie d'affichage (201) à afficher les informations de guidage en cas de détection que l'appareil de navigation électronique portatif (200) a été retiré de l'appareil électronique embarqué dans un véhicule (100).

4. Le système électronique embarqué dans un véhicule selon la revendication 1, 2 ou 3, où l'appareil audio électronique embarqué dans un véhicule (100) comprend un commutateur (122) destiné à commuter entre un premier affichage affichant des informations d'affichage de l'appareil de navigation électronique portatif (200) et un deuxième affichage affichant les informations d'affichage de l'appareil audio électronique embarqué dans un véhicule (100), sur la partie d'affichage (201), dans un état dans lequel l'appareil de navigation électronique portatif (200) est fixé.

5. Le système électronique embarqué dans un véhicule selon la revendication 4, où le premier dispositif de commande (106) est conçu de façon à désactiver l'affichage de la partie d'affichage (201) lorsque le commutateur (122) est enfoncé de manière continue pendant plus longtemps qu'une période de temps donnée.

6. Le système électronique embarqué dans un véhicule selon l'une quelconque des revendications précédentes, où le premier dispositif de commande (106) est conçu en outre de façon à afficher des informations d'affichage de l'appareil de navigation électronique portatif (200) sur la partie d'affichage (201) lorsque l'appareil audio électronique embarqué dans un véhicule (100) est sous tension.
